# FASCICULE DE BREVET EUROPEEN

(11) **EP 0 279 203 B1**
(45) Date de publication et mention de la délivrance du brevet: **13.01.1993**
(21) Numéro de dépôt: 88100841.1
(22) Date de dépôt: 21.01.1988
(51) Int. Cl.: G01K 11/16, G01K 13/00

(54) **Procédé pour la production de plaques thermographiques extensibles**
Verfahren zur Produktion extensibler thermografischer Platten
Process for the production of extensible thermographic plates

(30) Priorité: 16.02.1987 CH 564/87
(43) Date de publication de la demande: 24.08.1988
(73) Titulaire: VARNEL CHEMICAL BUSINESS S.A., CH-1700 Fribourg (CH)
(72) Inventeur: Wiegand, Aleide, D-3442 Wanfriedwerra (DE)
(74) Mandataire: Jörchel, Dietrich R.A.

(56) Documents cités:
- US-A- 4 301 054
- CHEMICAL ABSTRACTS, no. 073(12)061232, Columbus, Ohio, US; T.J. EVENSEN: "Color printing"
- CHEMICAL ABSTRACTS, no. 076(10)047489, Columbus, Ohio, US; V. CRAINICH, Jr.: "Microcapsules"

## Description

L'invention concerne un procédé pour la production de plaques thermographiques extensibles, que jusqu'ici on ne pouvait pas produire par les méthodes de production actuellement utilisées.

Comme chacun sait, depuis beaucoup d'années on utilise la thermographie comme un système de diagnostic, où une série d'affections peut être relevée par la mesure des différences de température entre les différentes zones du corps, mesure qu'on réalise par l' examen du changement de couleur de couches de cristaux liquides mises en contact du corps.

Initialement les cristaux liquides étaient déposés sur des plaques rigides de support et ensuite on est passé aux plaques flexibles qui adhérent mieux au corps, mais qui ne représentent pas encore la solution optimale, étant donné que même une plaque flexible n'adhére pas parfaitement aux courbures complexes du corps humain, et donc le problème était celui de réaliser des plaques non seulement flexibles mais aussi extensibles.

Pour résoudre ce problème on a pensé tout d'abord aux cristaux liquides non microcapsulés, étant donné que les microcapsules en général ne sont pas élastiques, étant des enveloppes assez rigides, mais les essais avec les cristaux liquides non microcapsulés ont confirmé l' impossibilité de suivre ce moyen, surtout par la grosse dégradation que subissent les cristaux liquides non protegés et par d'autres graves inconvénients qui se produissent tant dans la phase de production que dans la phase d'emploi.

Ainsi on a dirigé son attention sur la possibilité d' utiliser les cristaux liquides microcapsulés et on a vérifié que les cristaux liquides microcapsulés, introduits dans des véhicules opportunément formulés et avec des additifs, forment une pellicule suffisamment élastique à déposer sur un élastomère de support, mais à condition que des rapports déterminés entre le véhicule et les microcapsules soient respectés, puisqu'en dehors de tel rapport optimal on obtient ou des couleurs trop pâles des cristaux liquides microcapsulés ou un manque d' élasticité de la plaque. Même si le niveau d'élasticité finale qu'on peut obtenir n'est pas très haut, étant donné que les microcapsules sont quand même des corps rigides, il est tout à fait suffisant à réaliser les plaques élastiques désirées.

Comme chacun sait, pour pouvoir appliquer les cristaux liquides microcapsulés, sur un support, il est nécessaire d'appliquer aussi une couche adhésive et une couche noire de base qui crée le nécessaire contraste de fond pour la lecture de la carte thermographique et tous ces matériels doivent donc être élastiques comme la plaque de support et compatibles entre eux pour pouvoir réaliser les buts de cette invention-ci.

Pour pouvoir arriver donc à la formation d'une plaque extensible adéquate au but recherché on a dû resoudre un grand nombre de problèmes qui peuvent être résumés comme suit: la formulation de l'élastomère qui constitue le support doit être telle qu'elle puisse être pigmentée de noir et que sa viscosité puisse être modifiée, elle doit présenter une formation réduite de mousse, elle doit adhérer suffisamment au support de travail mais sans qu' elle se colle à celui-ci, pour pouvoir être emportée facilement après le durcissement du revêtement, elle doit être réceptive aux cristaux liquides microcapsulés, qui doivent donc bien se déposer sans formation de cratères et elle ne doit pas subir des altérations d'élasticité avant, durant et après le travail.

Dans le brevet US-A-4 301 054 est décrit un procédé pour la production de plaques thermographiques extensibles comprenant l'application de formulations d'encre capsulaire à base de cristaux liquides microcapsulés sur des plaques d'élastomère ainsi que l'utilisation des additifs, notamment une solution d'alcool polyvinylique pour conférer une stabilité et élasticité auxdites formulations.

De plus, la plaque thermographique extensible doit offrir au médecin une absolue certitude de reproductibilité des performances et donc il est nécessaire que les cristaux liquides microcapsulés présentent des températures de virage-couleurs absolument constantes, ce qui était presque impossible à obtenir sur les élastomères avec les formulations habituelles.

Après de nombreuses expériences, on a trouvé que l'élastomère qui donne les meilleurs résultats comme support est le latex naturel, c'est-à-dire la matière première déjà normalement utilisée par des différentes applications dans le domaine médical, comme les gants de chirurgien et ainsi de suite, tandis que les élastomères artificiels à base aqueuse comme les émulsions aqueuses à base de résines vinyliques, polyuréthaniques et analogues, bien qu'elles puissent aussi être utilisées en théorie, n'ont pas donné de résultats meilleurs que ceux obtenus par le latex naturel. Cependant cette invention prévoit en général l'utilisation d'élastomère à base aqueuse, même si, à présent, la forme de réalisation de beaucoup préférée est le latex naturel.

La présente invention permet de pallier à ce problème de stabilité de température de virage-couleurs des cristaux liquides.

Le procédé selon l'invention est caractérisé en ce que l'on modifie le liant par l'adjonction d'un sel inorganique du cobalt.

En effet, on a trouvé de manière surprenante après une longue expérimentation, que cette stabilité est atteinte par l'utilisation, comme liant de l'encre capsulaire, d'une solution d'alcool polyvinylique modifié par l'adjonction d'un sel inorganique du cobalt, qui permet d'atteindre une bonne élasticité sans altérer la structure ou les performances des cristaux liquides, puisque le sel de cobalt absorbe de l'eau et maintient humide la pellicule et donc garantit son élasticité et mon inaltérabilité; de cette façon il satisfait à la principale qualité requise par la thermographie, c'est-à-dire la fiabilité de la lecture des résultats.

L'autre problème fondamental à résoudre était celui du système d'application des cristaux liquides microcapsulés sur le support d'élastomère, puisque par les technologies conventionnelles ni l'application par sérigraphie ni celle à couche mince n'avaient donné des résultats appréciables, et plus particulièrement la sérigraphie à cause de la formation de mousse résistante aux agents anti-mousse ordinaires, et la couche mince par le degré de densité de la formulation, insuffisant à maintenir la continuité de la couche. Ces deux problèmes ont été brillamment résolus d'une façon non prévisible par un technicien moyen de la branche.

Pour la sérigraphie on a trouvé de manière surprenante que l'adjonction à l'encre capsulaire de diottil-sodium-sulfosuccinate à très bas dosage agit en anti-mousse et en mouillant et recompose les cratères éventuels qui se forment dans la couche de cristaux liquides microcapsulés.

Pour la couche mince au contraire on a pu augmenter la viscosité par l'adjonction dans la phase de dessiccation d'un derivé de l'acide succinique. Par cela on a réussi à utiliser les deux systèmes classiques d'application des cristaux liquides microcapsulés pour obtenir les plaques extensibles d'après cette invention-ci.

La formulation de l'encre capsulaire, c'est-à-dire la composition qui contient les cristaux liquides microcapsulés a en général un pourcentage de microcapsules inférieur à la normale, étant donné qu'il faut favoriser quantitativement la présence du véhicule liant élastique qui ne peut pas descendre au dessous d'un certain pourcentage et pour cette raison on utilise de préférence les cristaux liquides synthétiques, qui ont une brillance superieure, même s'il est possible d'utiliser aussi les cristaux liquides cholestériques traditionnels.

Suit la description détaillée d'un exemple pratique de réalisation par sérigraphie de plaques thermographiques extensibles, qui illustre la méthode d'après cette invention-ci; néanmoins on doit comprendre que cet exemple est donné à titre purement explicatif et non limitatif de la portée de l'invention.

### EXEMPLE

Des plaques de latex naturel avec une épaisseur moyenne de 120 à 250 micron sont lavées soigneusement à l'eau et au savon, pour emporter la poudre de talc et toutes les éventuelles impurités, et ensuite faites dessécher.

On procéde maintenant à l'application sérigraphique d'un adhésif moelleux sur des plaques de méthylméthacrylate (Plexiglass), avec la composition suivante: 3 parts d'un vernis sérigraphique transparent à base cellulosique (Celloflex); 1 part de vernis adhésif sérigraphique ( (Argonstick); diluant, tant ce qui suffit (mélange de toluol et xylène); s'il est nécessaire, un anti-moussant à base de silicones (SAG) en quantité très reduite, 1 ou 2 gouttes par Kg. On exécute un passage unique sur une toile sérigraphique à 77 fils.

Ensuite on place les plaques de latex sur les plaques de Plexiglass au moyen d'un coupleur pour pellicules plastiques (Mylar). On procéde maintenant à l' application du noir de base pour sérigraphie, comme par exemple le COLORTEX LP (encre noire pour sérigraphie), éventuellement dilué par le minimum indispensable d'eau, s'il est nécessaire, sur un châssis sérigraphique à 43 fils, avec au moins deux passages avec une dessiccation intermédiaire d'au moins 7 heures; on conseille plusieurs passages pour un meilleur niveau de recouvrement.

A ce point-ci on peut exécuter l'application par sérigraphie des cristaux liquides microcapsulés avec la formulation suivante: encre capsulaire BDH standard (cristaux liquides synthétiques microcapsulés): 2 parts; liant au cobalt: 1 part; glycérine (émollient): 3 %; diottil-sodium-sulfosuccinate, solution à 10 %: 4-8 gouttes par Kg.

Le liant au cobalt est à son tour constitué par le 60 % d'une solution d'alcool polyvinylique (Mowiol 20-98) à 13 % et par le 40 % de nitrate de cobalt. On utilise une sérigraphie à 43 fils et on exécute 5 doubles passages sérigraphiques. Par double passage sérigraphique on entend deux passages sérigraphiques consécutifs sans dessiccation intermédiaire et sans enlévement du support d'impression. Les trois premiers doubles passages peuvent être exécutés après dessiccation normale en four, tandis que les deux derniers passages doivent être exécutés au bout d'au moins 12 heures l'un de l' autre, pour éviter une viscosité de la déposition de cristaux liquides qui peut provoquer des problèmes de détachement du châssis avec une conséquente formation de mousse ou d'irrégularités d'autre genre.

Les plaques obtenues de cette façon montrent une très bonne stabilité dans le temps, une stricte tolérance de virage de +/- 0.5 °C, une bonne coloration et brillance des cristaux liquides microcapsulés et une bonne elasticité, et elles doivent être conservées sur les plaques de Plexiglass avec l'interposition de 4 cales d'espacement placées aux angles de telle sorte que les plaques n'entrent pas en contact entre elles.

On doit remarquer qu'on pourrait utiliser du latex naturel prélablement peint en noir avec l'adjonction dans les mélanges d'un noir couvrant, tel que le noir de fumée, et de cette façon on épargnerait la déposition sérigraphique de la couche noir de base de contraste.

La déposition à couche mince pourra être exécutée avec des modalités et des formulations analogues à celles citées ci-dessus, mais avec l'operation supplémentaire d'ajouter pendant les phases de dessiccation, et surtout pendant les deux premières heures, un dérivé (ester ou éther) de l'acide succinique pour augmenter la viscosité de l'encre capsulaire, qui autrement ne réussirait pas à créer une couche avec la nécessaire densité et continuité.

## Revendications

1. Procédé pour la production de plaques thermographiques extensibles, selon lequel on applique des formulations d'encre capsulaire à base de cristaux liquides microcapsulés sur des plaques d'élastomère, lesdites formulations étant rendues élastiques au moyen de véhicules et d'additifs et comprenant comme liant une solution d'alcool polyvinylique, caractérisé en ce que l'on modifie le liant par l'adjonction d'un sel inorganique du cobalt.

2. Procédé selon la revendication 1, caractérisé par le fait que les formulations de cristaux liquides microcapsulés sont appliqués par sérigraphie.

3. Procédé selon la revendication 1, caractérisé par le fait que les formulations de cristaux liquides microcapsulés sont déposées en couche mince.

4. Procédé selon l'une des revendications précédentes, caractérisé par le fait que la plaque d'élastomère est constituée par du latex naturel.

5. Procédé selon l'une des revendications 1 à 4, caractérisé par le fait que le sel inorganique du cobalt est le nitrate de cobalt constituant 40% de la solution du liant, les 60% restant étant constitués par une solution d'alcool polyvinylique à 13%.

6. Procédé selon l'une ou plusieurs des revendications précédentes, caractérisé par le fait qu'on ajoute à la formulation d'encre capsulaire du diottil-sodium-sulfosuccinate à très bas dosage comme agent antimousse et mouillant pour donner uniformité à la couche et éviter la formation de mousse.

7. Procédé selon l'une ou plusieurs des revendications précédentes, caractérisé par le fait qu'on ajoute un dérivé de l'acide succinique dans la phase de dessiccation des plaques, pour augmenter la viscosité de l'encre capsulaire, particulièrement dans la déposition en couche mince.

8. Procédé selon l'une ou plusieurs des revendications précédentes, caractérisé par le fait que les cristaux liquides microcapsulés sont du type synthétique.

## Claims

1. A process for the production of extendable thermographic plates, according to which capsular ink formulations based on microencapsulated liquid crystals are applied onto elastomer plates, the said formulations being made elastic by means of vehicles and additives and comprising as a binder a solution of polyvinyl alcohol wherein the binder is modified by the addition of an inorganic cobalt salt.

2. A process according to claim 1, wherein the microencapsulated liquid crystal formulations are applied by screen printing.

3. A process according to claim 1, wherein the microencapsulated liquid crystal formulations are deposited as a thin layer.

4. A process according to one of the preceding claims, wherein the elastomer plate consists of natural latex.

5. A process according to one the claims 1 to 4, wherein the inorganic cobalt salt is cobalt nitrate, consisting of 40% of the solution of the binder, the 60% remaining consists of 13% strength solution of polyvinyl alcohol.

6. A process according to one or more of the preceding claims, wherein dioctyl sodium sulphosuccinate is added in a very low dosage as an antifoam and wetting agent in order to impart uniformity to the layer and to prevent foam formation, to the capsular ink formulation.

7. A process according to one or more of the preceding claims, wherein a succinic acid derivative is added during the plate drying stage, in order to increase the viscosity of the capsular ink, especially in the deposition as a thin layer.

8. A process according to one or more of the preceding claims, wherein the microencapsulated liquid crystals are of the synthetic type.

## Patentansprüche

1. Verfahren, um dehnbare thermografische Platten herzustellen, indem eingekapselte Tintenformulierungen, basierend auf mikroeingekapselten flüssigen Kristallen, auf Elastomerplatten aufgetragen werden, wobei die genannten Formulierungen mittels Träger- und Zusatzmittel elastisch gemacht werden, und als Bindemittel eine Polyvinyl Alkohol-Lösung enthalten, dadurch gekennzeichnet, dass das Bindemittel durch Zusatz eines anorganischen Kobaltsalzes verändert wird.

2. Verfahren nach Anspruch 1, dadurch gekennzeichnet, dass die mikroeingekapselten flüssigen Mikrokristallformulierungen mittels Siebdruck aufgetragen werden.

3. Verfahren nach Anspruch 1, dadurch gekennzeichnet, dass die mikroeingekapselten flüssigen Kristallformulierungen in Dünnschicht aufgetragen werden.

4. Verfahren nach einem der vorherigen Ansprüche, dadurch gekennzeichnet, dass die Elastomerplatte aus natürlichem Latex besteht.

5. Verfahren nach einem der Ansprüche 1 bis 4, dadurch gekennzeichnet, dass das anorganische Kobaltsalz Kobaltnitrat ist, und dass es 40% der Bindemittellösung ausmacht, wobei die übrigen 60% aus einer 13%igen Polyvinyl Alkohol-Lösung bestehen.

6. Verfahren nach einem oder mehreren der vorherigen Ansprüche, dadurch gekennzeichnet, dass man der eingekapselten Tintenformulierung eine kleine Menge Natrium-Dioctyl-Sulfonsuccinat als Antischaum- und Benetzmittel zufügt, um der Schicht Gleichmässigkeit zu verleihen und Schaumbildung zu verhindern.

7. Verfahren nach einem oder mehreren der vorherigen Ansprüche, dadurch gekennzeichnet, dass man während der Trocknungsphase der Platten ein Derivat der Bernsteinsäure zufügt, um die Viskosität der eingekapselten Tinte zu erhöhen, insbesondere während der Auftragung in Dünnschicht.

8. Verfahren nach einem oder mehreren der vorherigen Ansprüche, dadurch gekennzeichnet, dass die mikroeingekapselten flüssigen Kristalle synthetisch sind.
